# EUROPEAN PATENT APPLICATION

(11) **EP 4 650 590 A1**
(43) Date of publication of application: **19.11.2025**
(21) Application number: 25175260.6
(22) Date of filing: 09.05.2025
(51) Int. Cl.: F02M 21/02

(54) **FUEL INJECTOR FOR A GASEOUS FUEL**

(30) Priority: 16.05.2024 IT 202400011164
(71) Applicant: Marelli Europe S.p.A., 20011 Corbetta (MI) (IT)
(72) Inventor: SIGNORELLI, Giorgio, 20011 CORBETTA (MI) (IT); PETRONE, Michele, 20011 CORBETTA (MI) (IT); ZAMPOLLI, Francesco, 20011 CORBETTA (MI) (IT)
(74) Representative: Studio Torta S.p.A.

(57) **Abstract**

A fuel injector (1) for a gaseous fuel and having: an injection nozzle (3); a support body (4), which ends in the injection nozzle (3); an injection valve (7), which is configured to adjust the gaseous fuel flow through the injection nozzle (3) and is provided with a movable shutter (9) arranged and with a valve seat (10); and an actuator (6), which is configured to move the shutter (9) between a closed position of the injection valve (7), in which the shutter (9) is pressed against the valve seat (10), and an open position of the injection valve (7), in which the shutter (9) is separate from the valve seat (10). The shutter (9) and the valve seat (10) are shaped so as to have a main contact area (17), in which the shutter (9) comes into contact with the valve seat (10), when it is in the closed positions, and also a secondary contact area (18), which is separate and spaced apart from the main contact area (17) and in which the shutter (9) comes or could come into contact with the valve seat (10), when it is in the closed position.

## Description

### CROSS-REFERENCE TO RELATED APPLICATIONS

This patent application claims priority from Italian patent application no. 102024000011164 filed on May 16, 2024, the entire disclosure of which is incorporated herein by reference.

### TECHNICAL FIELD

The invention relates to a fuel injector for a gaseous fuel.

The invention advantageously applies to an electromagnetic hydrogen injector, to which explicit reference will be made in the description below without because of this lacking generality.

### PRIOR ART

An electromagnetic hydrogen injector comprises a cylindrical, tubular support body provided with a central feeding channel, which fulfils the function of a fuel duct and ends with an injection nozzle controlled by an injection valve operated by an electromagnetic actuator. The injection valve is provided with a plunger, which is moved by the action of the electromagnetic actuator between a closed position and an open position of the injection nozzle against the action of a closing spring, which pushes the plunger towards the closed position. The plunger ends with a shutter designed to rest, in a sealing manner, against a valve seat of the injection valve.

The most suitable configuration of a hydrogen injector entails the shutter opening outwards so that the closed position of the shutter is not negatively affected by the pressure developing in the combustion chamber; namely, when the shutter opens outwards, the pressure developing in the combustion chamber pushes the shutter towards the closed position and, therefore, it is always ensured that the fuel injector does not have undesired openings caused by a pressure peak in the combustion chamber.

When both the shutter and the valve seat are made of metal, the sealing of the injection valve in the long term (namely, after several operating cycles of the injector) can be problematic, as even small wear in the contact area between the shutter and the valve seat can cause hydrogen leakage. To this regard, it is important to point out that hydrogen has a very small molecule and that, therefore, even infinitesimal cracks can be sufficient for an unwanted leak of hydrogen. Furthermore, it should be pointed out that hydrogen (unlike liquid fuels based on hydrocarbons) has neither lubricating properties nor hydraulic braking capacities to mitigate the impact of the shutter against the valve seat; consequently, in a hydrogen injector, the wear suffered by the valve seat and by the shutter can be decidedly high (and, therefore, the risk of creating cracks in the valve seat and/or in the shutter is high).

In order to solve the drawback described above, the valve seat can be covered with a sealing gasket (made of a non-metal material) having the function of ensuring a tight seal (thanks to the ability of the seal to elastically deform so as to adapt itself to the shape of the shutter). However, it has been observed that the gasket of a hydrogen injector suffers from a quick wear and, therefore, significantly limits the useful life of the injector.

Patent application DE102014224340A1 and patent application DE102015201392A1 disclose a gas injector for the direct injection of a gaseous fuel into the combustion chamber of an internal combustion engine; the injector comprises: a valve closing element for opening and closing a passage opening, a first sealing seat arranged closer to the combustion chamber and without elastomers, in particular a metal or ceramic sealing seat, and a second sealing seat arranged further away from the combustion chamber and with at least one elastomer sealing element.

Patent application DE102014224345A1 discloses a gas injector for the direct injection of a gaseous fuel into the combustion chamber of an internal combustion engine; the injector comprises: a valve closing element for opening and closing a passage opening, a first sealing seat with two metal sealing elements, a second sealing seat with an elastomer sealing element and a third sealing seat with a further elastomer sealing element.

### DESCRIPTION OF THE INVENTION

The object of the invention is to provide a fuel injector for a gaseous fuel that does not suffer from the drawbacks described above (namely, guarantees a perfect seal even in the long term) and, in particular, is easy and economic to be manufactured.

According to the invention, there is provided a fuel injector for a gaseous fuel as claimed in the appended claims.

The appended claims describe a preferred embodiment of the invention that is an integral part of the description.

### BRIEF DESCRIPTION OF THE DRAWINGS

The invention will now be described with reference to the accompanying drawings, which show some non-limiting embodiments thereof, wherein:
- figure 1 is a partially sectional side view of a fuel injector; and
- figures 2 and 3 are two longitudinal section views of an end part of the fuel injector of figure 1 in a closed position and in an open position, respectively;
- figure 4 is a view, on a larger scale, of a detail of figures 2 and 3;
- figure 5 is a view, on a larger scale, of a variant of the detail of figure 4; and
- figure 6 schematically shows an internal combustion engine using the fuel injector of figure 1.

### PREFERRED EMBODIMENTS OF THE INVENTION

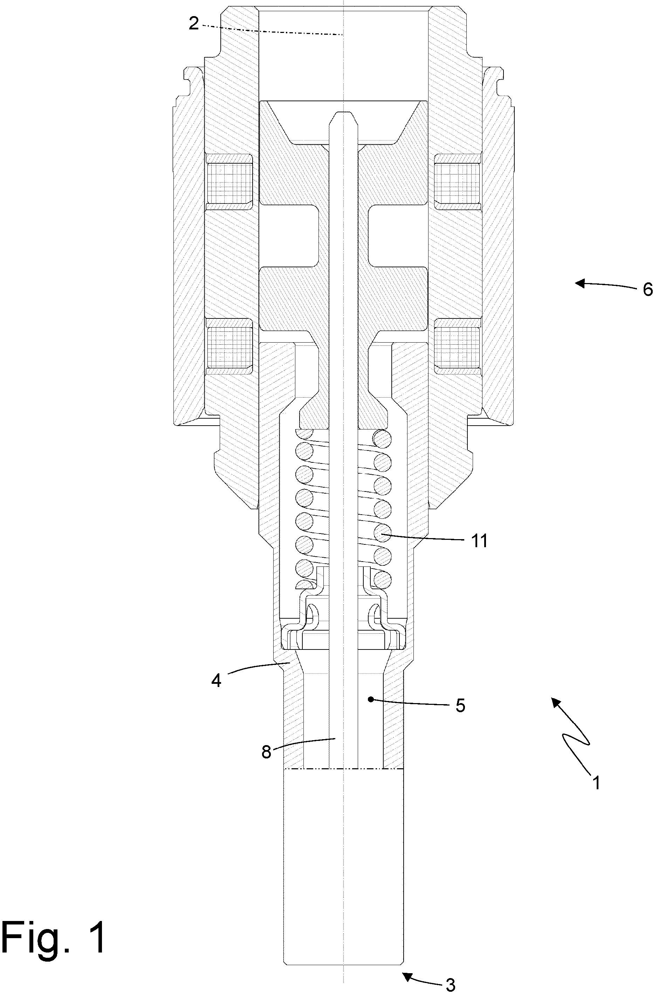

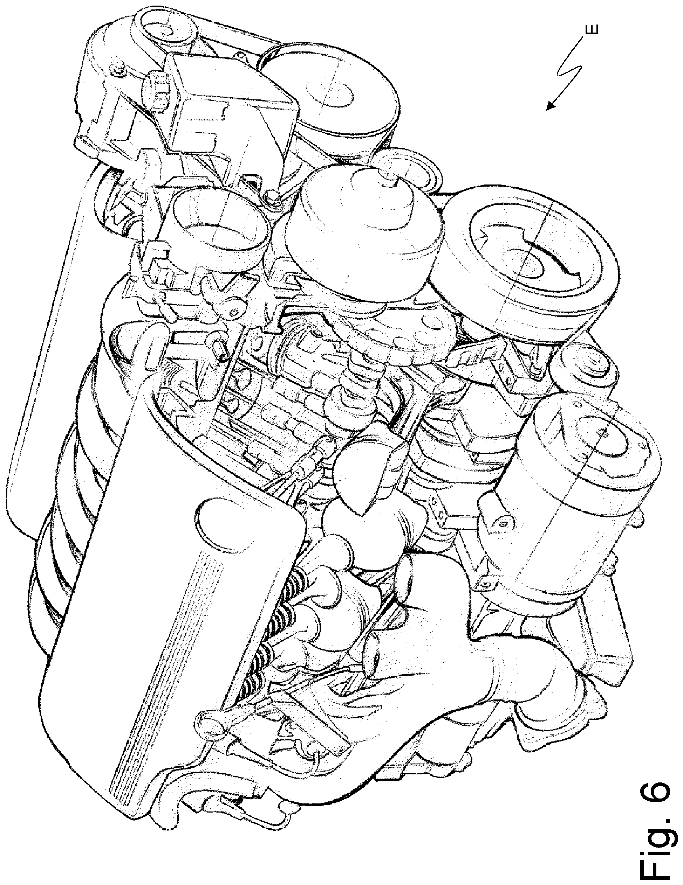

In figure 1, number 1 indicates, as a whole, a gaseous fuel (in particular, hydrogen) injector, which develops around a longitudinal axis 2 and is designed to be operated so as to inject hydrogen through an injection nozzle 3, which leads directly into a combustion chamber of a cylinder of an internal combustion engine E (schematically shown in figure 6). Namely, the internal combustion engine E is powered by hydrogen and is provided with an injection system that directly injects hydrogen into a plurality of cylinders using corresponding hydrogen injectors 1; therefore, the internal combustion engine E comprises at least one cylinder and the injection system that directly injects hydrogen into the cylinder using the fuel (hydrogen) injector 1.

According to figure 1, the fuel injector 1 comprises a support body 4, which has a cylindrical, tubular shape with a variable cross-section along the longitudinal axis 2 and has a feeding channel 5 extending along the entire length of the support body 4 to feed hydrogen under pressure to the injection nozzle 3.

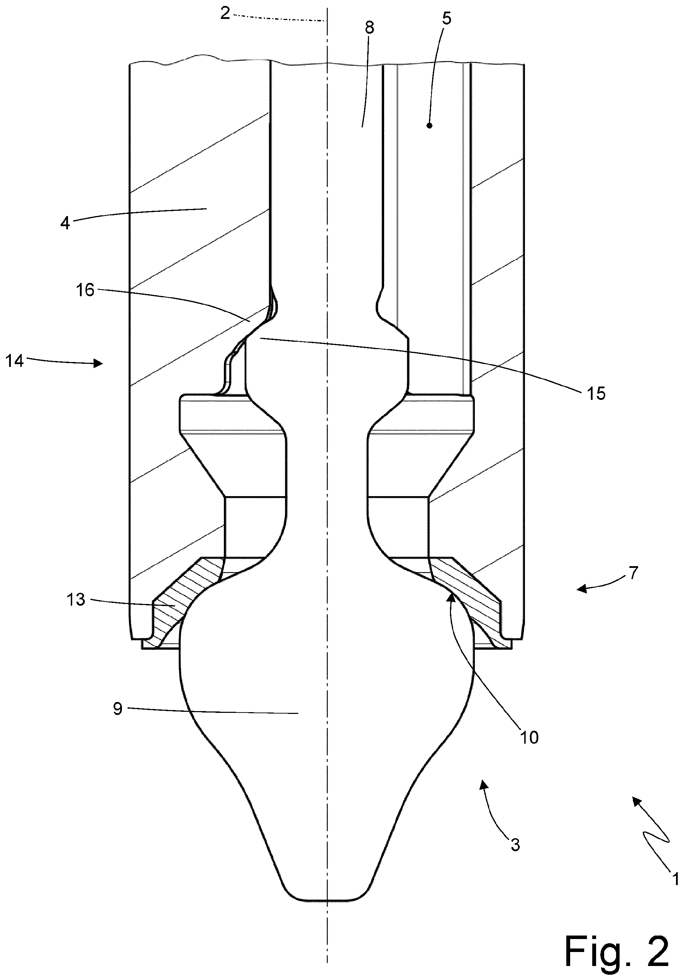

The support body 4 houses an electromagnetic actuator 6 in the area of an upper portion of its and an injection valve 7 (shown in figure 2) in the area of a lower portion of its; in use, the injection valve 7 is operated by the electromagnetic actuator 6 so as to adjust the flow of hydrogen through the injection nozzle 3, which is obtained in the area of the injection valve 7. According to a different embodiment, which is not shown herein, the actuator 6 is a piezoelectric actuator instead of being an electromagnetic actuator.

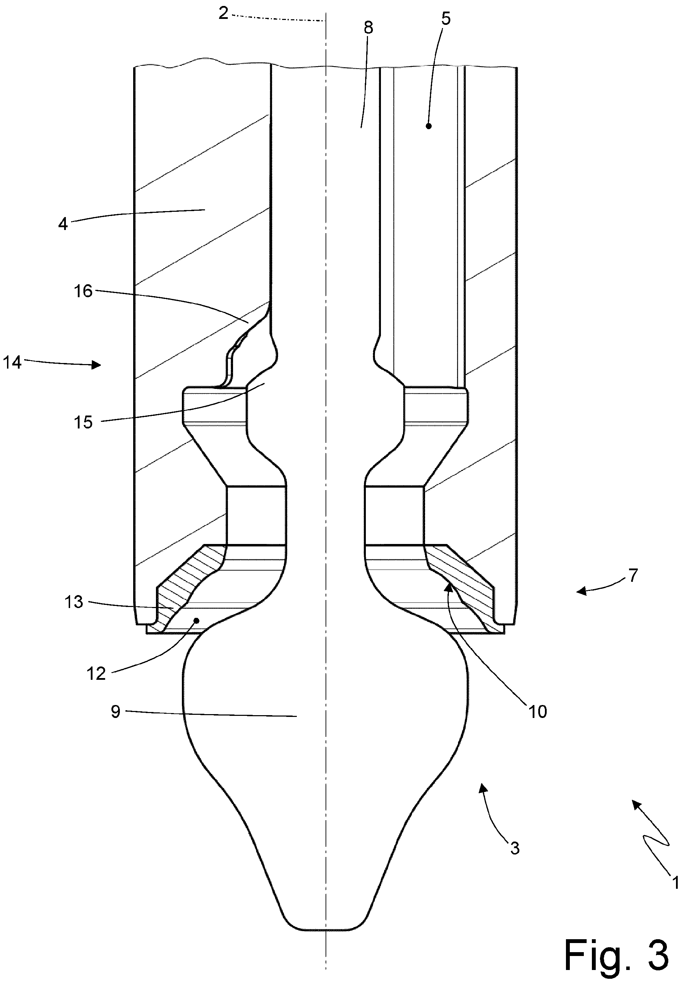

The electromagnetic actuator 6 is configured to axially move (namely, along the longitudinal axis 2) a movable equipment provided with a plunger 8 ending with a shutter 9 (shown in figure 2) shaped like a bulb. The shutter 9 cooperates with a valve seat 10 (shown in figure 2) of the injection valve 7 so as to adjust the flow of hydrogen through the injection nozzle 3; the valve seat 10 constitutes the sealing area, namely the area in which the shutter 9 of the injection valve 7 comes into contact with the support body 4 to create the seal. In other words, the support body 4 ends with a through opening, where the valve seat 10 is defined and which is engaged by the shutter 9. In particular, the electromagnetic actuator 6 is configured to move the shutter 9 between a stable completely closed position (shown in figure 2), in which the shutter 9 is still and stationary, and an open position (shown in figure 3) of the injection valve 7. In other words, in the closed position (shown in figure 2), the shutter 9 is stationary and stable, as it has reached a limit stop that forbids a further closing movement. Furthermore, the electromagnetic actuator 6 is provided with a closing spring, which keeps the fuel injector 1 normally closed, namely which pushes the shutter 9 towards the closed position of the injection valve 7. In other words, the injection valve 7 normally is closed due to the closing spring 11, which pushes the plunger 8 to the closed position, in which the shutter 9 of the plunger 8 presses against the valve seat 10 of the injection valve 7.

According to figures 2 and 3, the shutter 9 is arranged on the outside of the support body 4 and is pushed against the support body 4 by the closing spring 11 of the electromagnetic shutter 6; as a consequence, in order to shift from the closed position to the open position of the injection valve 7, the shutter 9 moves along the longitudinal axis 2 towards the outside of the support body 4, i.e. with a moving direction that is the same as a hydrogen feeding direction. In the open position of the injection valve 7 (shown in figure 3), the shutter 9 is separate from the valve seat 10, thus creating a passage opening 12 having a cross section shaped like a crown; as a consequence, the hydrogen injected through the injection nozzle 3 has, at the outlet, an internally hollow conical shape. In other words, the electromagnetic actuator 6 is configured to move the shutter 9 between the closed position (shown in figure 2) of the injection valve 7, in which the shutter 9 is pressed against the valve seat 10, and the open position (shown in figure 3) of the injection valve 7, in which the shutter 9 is separate from the valve seat 10 so as to create the passage opening 12 through which hydrogen flows.

According to the embodiment shown in the accompanying figures, the shutter 9 has: an initial portion, which is coupled to the valve seat 10 and has, along the longitudinal axis 2, a progressively increasing outer diameter, an intermediate portion, which has, along the longitudinal axis 2, a substantially constant outer diameter, and an end portion, which is closer to the injection nozzle 3 and has, along the longitudinal axis 2, a progressively decreasing outer diameter. According to other embodiments, which are not shown herein, the shutter 9 has a different shape and, for example, could lack the end portion (namely, it could end at the bottom with a flat wall arranged immediately after the intermediate portion or arranged immediately after the initial portion).

According to figures 2 and 3, the fuel injector 1 comprises a sealing gasket 13 made of a non-metal material, which is coupled to the support body 4 and is arranged in the area of the injection valve 7 to create the valve seat 10; namely, in the closed position (shown in figure 2), the shutter 9 rests against an outer surface of the gasket 13 so as to obtain the seal and, therefore, prevent hydrogen from leaking out. The gasket 13 is made of a non-metal material (unlike the other components of the fuel injector 1, which are made of a metal material), which has an elasticity that is greater than an elasticity of the shutter 9 and of the support body 4. By way of example, the gasket 13 can be made of an elastomer material (namely, a natural or synthetic polymer having the behaviour of an elastic rubber) or of a plastic material (for example PTFE) .

According to figures 2 and 3, the fuel injector 1 comprises a limit stop system 14, which is separate from and independent of the gasket 13 and establishes the closed position (shown in figure 2) by stopping the movement of the plunger 8 pushed by the closing spring 11; in other words, the movement of the plunger 8, which moves due to the thrust exerted by the closing spring 11, does not stop because of the contact between the shutter 9 and the gasket 13 (which defines the valve seat 10), but stops because of the contact taking place in the limit stop system 14. The limit stop system 14 is configured (designed) so that, in the closed position (shown in figure 2), namely in the position in which the limit stop system 14 stops the movement of the plunger 8, the shutter 9 is in contact with the gasket 13 (which defines the valve seat 10) and presses on the gasket 13 with enough force to ensure the necessary seal, namely elastically compresses the gasket 13 to ensure the necessary seal.

The limit stop system 14 comprises a striker element (15) integral to the plunger 8 and a striker element 16, which is integral to the support body (4), faces the striker element 15 and comes into contact with the striker element 15 to stop the movement of the plunger 8.

According to a preferred embodiment shown in the accompanying figures, the limit stop system 14 is not adjacent to the gasket 13; in other words, the limit stop system 14 is arranged at a non-zero axial distance (namely, measured along the longitudinal axis 2) from the gasket 13 in order to be axially spaced apart from the gasket 13. Since the limit stop system 14 is not adjacent to the gasket 13, the portion of the support body 4 in the area of the gasket 13 (namely, in the area of the valve seat 10 of the injection valve 7) can be designed (optimised) to ensure the best hydrogen flow and the sealing diameter of the valve seat 10 can be greater; in other words, since in the area of the valve seat 10 defined by the gasket 13 there are no shape or size limitations due to the limit stop system 14 (as the limit stop system 14 is far from the gasket 13), there is greater design freedom to create the area of the gasket 13 (namely, the area of the valve seat 10 of the injection valve 7) so as to ensure the best hydrogen flow and so as to increase the sealing diameter of the valve seat 10.

In other words, the limit stop system 14 is coupled to the plunger 8 and is arranged at a non-zero axial distance from the gasket 13 so as to be farther from the injection nozzle 3 than the gasket 13; moreover, the limit stop system 14, in any position, does not interrupt the feeding channel 5 and, therefore, does not prevent the gaseous fuel from flowing along the feeding channel 5 towards the injection nozzle 3 passing next to the limit stop system 14. Namely, the two elements 15 and 16 of the limit stop system 14 are arranged inside the feeding channel 5 and only partially occupy the feeding channel 5 so that, in any position, the fuel is free to flow along the feeding channel 5 towards the injection nozzle 3 passing next to the limit stop system 14.

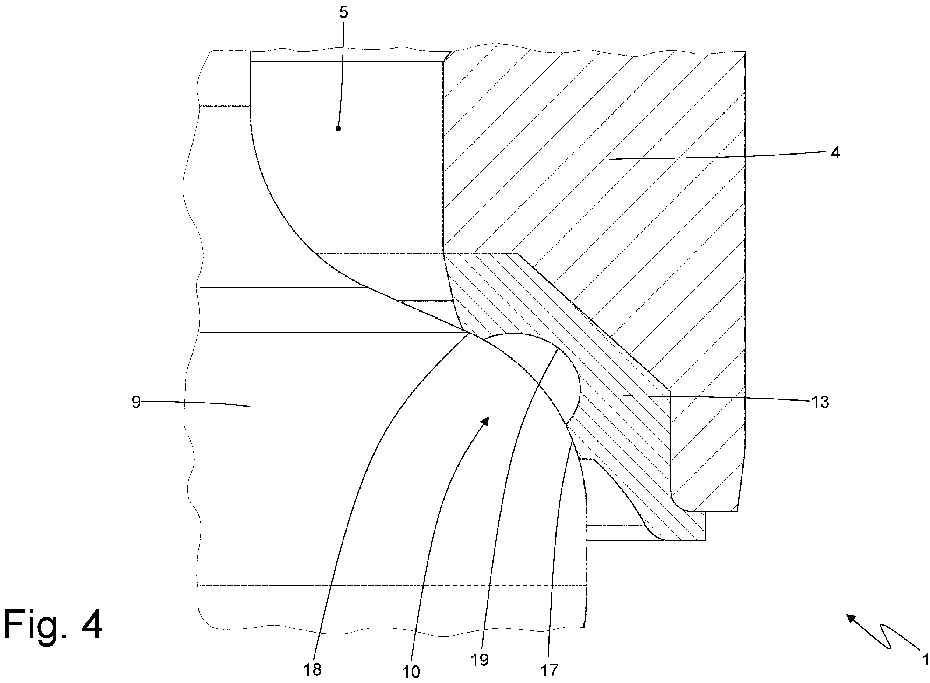

According to figure 4, the shutter 9 and the valve seat 10 are shaped so as to have a main contact area 17 of the non-metal material gasket 13 with an annular shape (axially symmetrical relative to the longitudinal axis 2), in which the shutter 9 is always in contact with the valve seat 10 created by the non-metal material gasket 13 (namely, the sealing area of the support body 4), when it is in the stable completely closed position. Furthermore, the shutter 9 and the valve seat 10 are shaped so as to have a secondary contact area 18 of the non-metal material gasket 13 with an annular shape (axially symmetrical relative to the longitudinal axis 2), which is separate and spaced apart from the main contact area 17 and in which the shutter 9 comes (or, alternatively, could come) into contact with the valve seat 10, when it is in the closed position.

The shutter 9 and the valve seat 10 are shaped so as to have a separation area 19, which is part of the non-metal material gasket 13, is interposed between the main contact area 17 and the secondary contact area 18, separates the main contact area 17 from the secondary contact area 18 and in which the shutter 9 never comes into contact with the valve seat 10 created by the non-metal material gasket 13. In particular, when the shutter 9 is in the closed position, the shutter 9 is, in the area of the separation area 19, at a distance from the valve seat 10, which is greater than a distance, distancing the shutter 9 from the valve seat 10 in the area of the main contact area 17, and than a distance, distancing the shutter 9 from the valve seat 10 in the area of the secondary contact area 18. Namely, when the shutter 9 is in the closed position, the separation area 19 of the valve seat 10 is further away from the shutter 9 than the main contact area 17 of the valve seat 10 and the secondary contact area 18 of the valve seat 10.

In other words, the non-metal material gasket 13 defines both the main contact area 17 and the secondary contact area 18, which is separate and spaced apart from the main contact area 17.

According to figure 4, when the shutter 9 is in the closed position, the shutter 9 is at a constant distance from the valve seat 10 in the area of the entire main contact area 17; namely, throughout the main contact area 17, the shutter 9 is at the same distance from the valve seat 10, when the shutter 9 is in the closed position. Similarly, when the shutter 9 is in the closed position, the shutter 9 is at a constant distance from the valve seat 10 in the area of the entire secondary contact area 18; namely, throughout the secondary contact area 18, the shutter 9 is at the same distance from the valve seat 10, when the shutter 9 is in the closed position.

In the embodiment shown in figure 4, the shutter 9 and the valve seat 10 are shaped so as to come into contact with one another both in the main contact area 17 and in the secondary contact area 18, when the shutter 9 is in the closed position. In other words, even if the valve seat 10 has an initial and nominal size, the shutter 9 and the valve seat 10 are shaped so as to come into contact with one another both in the main contact area 17 and in the secondary contact area 18, when the shutter 9 is in the closed position. Hence, when the shutter 9 is in the closed position, the shutter 9 touches the valve seat 10 (namely, the sealing area) both in the main contact area 17 and in the secondary contact area 18.

In the embodiment shown in figure 4, the two contact areas 17 and 18 are shaped so as to always work together and, hence, constitute two separate and distinct sealing points, which are activated simultaneously when the shutter 9 is in the closed position.

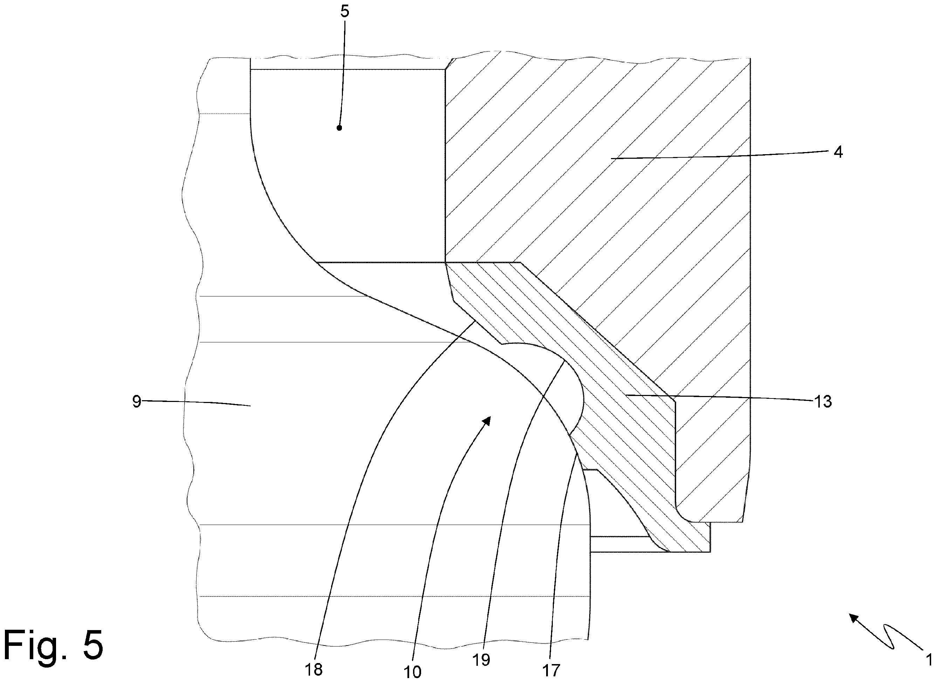

In the alternative embodiment shown in figure 5, the limit stop system 14 is not present and the closed position is established by the gasket 13 (which defines the valve seat 10); in other words, the movement of the plunger 8, which moves due to the thrust exerted by the closing spring 11, stops due to the contact between the shutter 9 and the gasket 13 (which defines the valve seat 10). In the alternative embodiment shown in figure 5, if the valve seat 10 has an initial and nominal size, the shutter 9 and the valve seat 10 are shaped so as not to come into contact with one another in the secondary contact area 18, when the shutter 9 is in the closed position; namely, if the valve seat 10 has an initial and nominal size and in the closed position, the shutter 9 touches the valve seat 10 (namely, the sealing area) only in the main contact area 17 and not in the secondary contact area 18. In other words, only if the valve seat 10 has a worn size (i.e. when the gasket 13 wears thin on the main contact area 17 so as to no longer ensure the desired seal), the shutter 9 and the valve seat 10 are shaped so as to come into contact with one another in the secondary contact area 18, when the shutter 9 is in the closed position; namely, only if the valve seat 10 has a worn size (i.e. when the gasket 13 wears thin on the main contact area 17 so as to no longer ensure the desired seal) and in the closed position, the shutter 9 touches the valve seat 10 (namely, the sealing area) both in the main contact area 17 and in the secondary contact area 18 (or only in the secondary contact area 18). Therefore, in the embodiment shown in figure 5, the secondary contact area 18 constitutes a *"reserve"* that operates only if the valve seat 10 has a worn size.

In the embodiment shown in figure 5, the two contact areas 17 and 18 are not shaped so as to always work together since, under nominal conditions (namely, when the fuel injector 1 is new and, therefore, not worn), the seal is obtained only in the main contact area 17, whereas the secondary contact area 18 does not perform any sealing function. On the other hand, when the fuel injector 1 is worn and, therefore, a change in shape and/or size has occurred in the area of the main contact area 17 (i.e. when the gasket 13 has worn thin on the main contact area 17 so as to no longer ensure the desired seal), the seal is also (or, if necessary, exclusively) obtained in the secondary contact area 18; namely, the secondary contact area 18 constitutes a back-up solution that is used only if a wear is present in the area of the main contact area 17.

When the shutter 9 is in the closed position, the shutter 9 is at a first constant distance from the valve seat 10 in the area of the entire main contact area 17 and is at a second constant distance from the valve seat 10 in the area of the entire secondary contact area 18. In the embodiment shown in figure 4, the first distance (zero, as the shutter 9 is in contact with the valve seat 10 in the area of the entire main contact area 17) is identical to the second distance (zero, as the shutter 9 is in contact with the valve seat 10 in the area of the entire secondary contact area 18). In the embodiment shown in figure 5, the first distance (zero, as the shutter 9 is in contact with the valve seat 10 in the area of the entire main contact area 17) is smaller than the second distance (not zero, as the shutter 9 is separate from the valve seat 10 in the area of the entire secondary contact area 18).

In the embodiment shown in the accompanying figures, the shutter 9 and the valve seat 10 are shaped so as to have two mutually separate and independent contact areas 17 and 18; according to other embodiments, which are not shown herein, the shutter 9 and the valve seat 10 are shaped so as to have more than two mutually separate and independent contact areas 17 and 18 (for example three, four or five mutually separate and independent contact areas 17 and 18).

In the embodiment described above, reference was made to the injection of hydrogen, but the injector 1 can be used to inject any other type of gaseous fuel, such as, for example, methane.

The embodiments described herein can be combined with one another, without for this reason going beyond the scope of protection of the invention.

The fuel injector 1 described above has numerous advantages.

First of all, the fuel injector 1 disclosed above ensures a perfect seal even in the long term. This result is obtained thanks to the presence of the gasket 13, which, being elastically compressed by the shutter 9 in the closed position (shown in figure 2), adapts itself to the shape of the shutter 9, sealing the entire contact area.

Furthermore, the fuel injector 1 described above has a very long service life. This result is obtained thanks to the presence of two distinct and separate contact areas 17 and 18 of the same non-metal material gasket 13 between the shutter 9 and the valve seat 10, which allow the sealing capacity to be increased when the shutter 9 is in the closed position. In particular, the two distinct and separate contact areas 17 and 18 can be configured (designed) to always operate together (as shown in figure 4) or to operate alternatively as shown in figure 5, in which the secondary contact area 18 acts as a reserve/replacement/support of the main contact area 17 in case of wear of the main contact area 17. Furthermore, this result is also obtained thanks to the fact that the movement of the plunger 8 towards the closed position (shown in figure 2) is stopped by the limit stop system 14 without excessively stressing (and, therefore, wearing) the gasket 13. In other words, the presence of the limit stop system 14 avoids excessively stressing the gasket 13 by discharging onto the gasket 13 all the kinetic energy possessed by the mobile equipment (of which the plunger 8 and the shutter 9 are part).

Finally, the fuel injector 1 described above is simple and economic to be manufactured, since it only has a few constructive differences, which can easily be implemented, compared to a known hydrogen (fuel) injector.

### LIST OF THE REFERENCE NUMBERS OF THE FIGURES

- 1: fuel injector
- 2: longitudinal axis
- 3: injection nozzle
- 4: support body
- 5: feeding channel
- 6: electromagnetic actuator
- 7: injection valve
- 8: plunger
- 9: shutter
- 10: valve seat
- 11: closing spring
- 12: passage opening
- 13: gasket
- 14: limit stop system
- 15: striker element
- 16: striker element
- 17: main contact area
- 18: secondary contact area
- 19: separation area
- E: internal combustion engine

## Claims

1. A fuel injector (1) for a gaseous fuel and comprising:
an injection nozzle (3);
a support body (4) with a tubular shape, which has a longitudinal axis (2) and is provided, on the inside, with a feeding channel (5) ending in the injection nozzle (3);
an injection valve (7), which is configured to adjust the gaseous fuel flow through the injection nozzle (3) and is provided with a movable shutter (9) arranged on the outside of the support body (4) and with a valve seat (10);
a non-metal material gasket (13), which is arranged in the area of the injection valve (7) to obtain the valve seat (10);
a plunger (8), which supports the shutter (9); and
an actuator (6), which is configured to move the shutter (9) between a stable completely closed position of the injection valve (7), in which the shutter (9) is still and stationary and is pressed against the valve seat (10), and an open position of the injection valve (7), in which the shutter (9) is separate from the valve seat (10) so as to create a passage opening (12), through which the gaseous fuel flows;
wherein the shutter (9) and the valve seat (10) created by the non-metal material gasket (13) are shaped so as to have a main contact area (17) of the non-metal material gasket (13), in which the shutter (9) is always in contact with the valve seat (10) created by the non-metal material gasket (13), when it is in the stable completely closed position;
the fuel injector (1) is **characterized in that** the shutter (9) and the valve seat (10) created by the non-metal material gasket (13) are shaped so as to have a secondary contact area (18) of the non-metal material gasket (13), which is separate and spaced apart from the main contact area (17) of the non-metal material gasket (13) and in which the shutter (9) is always, or only in case of wear of the main contact area (17), in contact with the valve seat (10) created by the non-metal material gasket (13), when it is in the stable completely closed position.

2. The fuel injector (1) according to claim 1, wherein the shutter (9) and the valve seat (10) created by the non-metal material gasket (13) are shaped so as to have a separation area (19), which is part of the non-metal material gasket (13), is interposed between the main contact area (17) and the secondary contact area (18), separates the main contact area (17) from the secondary contact area (18) and in which the shutter (9) never comes into contact with the valve seat (10) created by the non-metal material gasket (13).

3. The fuel injector (1) according to claim 2, wherein, when the shutter (9) is in the stable completely closed position, the shutter (9) is, in the area of the separation area (19), at a third distance from the valve seat (10) created by the non-metal material gasket (13), which is greater than a first distance, distancing the shutter (9) from the valve seat (10) created by the non-metal material gasket (13) in the area of the main contact area (17), and is greater than a second distance, distancing the shutter (9) from the valve seat (10) created by the non-metal material gasket (13) in the area of the secondary contact area (18).

4. The fuel injector (1) according to claim 1, 2 or 3, wherein, when the shutter (9) is in the stable completely closed position:
the shutter (9) is at a first constant distance from the valve seat (10) created by the non-metal material gasket (13) in the area of the entire main contact area (17); and
the shutter (9) is at a second constant distance from the valve seat (10) created by the non-metal material gasket (13) in the area of the entire secondary contact area (18).

5. The fuel injector (1) according to claim 4, wherein the first distance is smaller than the second distance.

6. The fuel injector (1) according to claim 4, wherein the first distance is equal to the second distance.

7. The fuel injector (1) according to one of the claims from 1 to 4, wherein the shutter (9) and the valve seat (10) created by the non-metal material gasket (13) are shaped so as to come into contact with one another both in the main contact area (17) of the non-metal material gasket (13) and in the secondary contact area (18) of the non-metal material gasket (13), when the shutter (9) is in the stable completely closed position.

8. The fuel injector (1) according to one of the claims from 1 to 4, wherein, even if the valve seat (10) created by the non-metal material gasket (13) has an initial and nominal size, the shutter (9) and the valve seat (10) created by the non-metal material gasket (13) are shaped so as to come into contact with one another both in the main contact area (17) of the non-metal material gasket (13) and in the secondary contact area (18) of the non-metal material gasket (13), when the shutter (9) is in the stable completely closed position.

9. The fuel injector (1) according to one of the claims from 1 to 4, wherein, if the valve seat (10) created by the non-metal material gasket (13) has an initial and nominal size, the shutter (9) and the valve seat (10) created by the non-metal material gasket (13) are shaped so as to not be in contact with one another in the secondary contact area (18) of the non-metal material gasket (13), when the shutter (9) is in the stable completely closed position.

10. The fuel injector (1) according to claim 9, wherein, only if the valve seat (10) created by the non-metal material gasket (13) has a worn size, the shutter (9) and the valve seat (10) created by the non-metal material gasket (13) are shaped so as to come into contact with one another in the secondary contact area (18) of the non-metal material gasket (13), when the shutter (9) is in the stable completely closed position.

11. The fuel injector (1) according to one of the claims from 1 to 10, wherein the non-metal material gasket (13) constituting the valve seat (10) is wide enough to define both the main contact area (17) and the secondary contact area (18), which is separate and spaced apart from the main contact area (17).

12. The fuel injector (1) according to one of the claims from 1 to 11 and comprising a limit stop system (14), which establishes the closed position, is separate from and independent of the gasket (13) and is configured so that, in the closed position, the shutter is in contact with the gasket (13) and elastically compresses the gasket (13) .

13. The fuel injector (1) according to claim 12, wherein the limit stop system (14) is configured to stop a movement of the shutter (9) independently of the contact of the shutter (9) against the gasket (13) constituting the valve seat (10).

14. The fuel injector (1) according to claim 12 or 13, wherein:
the limit stop system (14) is coupled to the plunger (8) and is arranged at an axial distance, namely measured along the longitudinal axis (2), other than zero from the gasket (13) so as to be farther from the injection nozzle (3) than the gasket (13); and
the limit stop system (14), in any position, does not interrupt the feeding channel (5) and, therefore, does not prevent the gaseous fuel from flowing along the feeding channel (5) towards the injection nozzle (3) passing next to the limit stop system (14).

15. The fuel injector (1) according to claim 13 or 14, wherein:
the limit stop system (14) comprises a first striker element (15) integral to the plunger (8) and a second striker element (16), which is integral to the support body (4), faces the first striker element (15) and comes into contact with the first striker element (15) to stop the movement of the plunger (8); and
the two elements (15, 16) of the limit stop system (14) are arranged inside the feeding channel (5) and only partially occupy the feeding channel (5) so that, in any position, the fuel is free to flow along the feeding channel (5) towards the injection nozzle (3) passing next to the limit stop system (14).
